# EUROPÄISCHE PATENTANMELDUNG

(11) **EP 4 450 596 A1**
(43) Veröffentlichungstag der Anmeldung: **23.10.2024**
(21) Anmeldenummer: 23168533.0
(22) Anmeldetag: 18.04.2023
(51) Int. Cl.: C10G 1/10

(54) **VERFAHREN ZUR PYROLYSE EINES KUNSTSTOFFS**

(71) Anmelder: OMV Downstream GmbH, 1020 Wien (AT)
(72) Erfinder: MASTALIR, Matthias, 1020 Wien (AT); LECHLEITNER, Andreas, 1020 Wien (AT)
(74) Vertreter: SONN Patentanwälte GmbH & Co KG

(57) **Zusammenfassung**

Die Erfindung betrifft ein Verfahren zur Pyrolyse eines Kunststoffs, insbesondere eines Altkunststoffs, umfassend die Schritte (a) Pyrolysieren des Kunststoffs in einem ersten Pyrolysereaktor, um ein erstes Pyrolyseprodukt zu erhalten, (b) Abtrennen eines Pyrolyserückstands vom ersten Pyrolyseprodukt in einer ersten Trenneinheit, (c) Trennen des Pyrolyserückstands in eine feststoffarme Fraktion und eine feststoffreiche Fraktion in einer zweiten Trenneinheit, und (d) Pyrolysieren der feststoffreichen Fraktion in einem zweiten Pyrolysereaktor, um ein zweites Pyrolyseprodukt zu erhalten. Weiters betrifft die Erfindung eine Vorrichtung zur Pyrolyse eines Kunststoffs mit dem Verfahren.

## Beschreibung

Die Erfindung betrifft ein Verfahren und eine Vorrichtung zur Pyrolyse eines Kunststoffs, insbesondere eines Altkunststoffs.

Verfahren zum Pyrolysieren eines Ausgangsstoffs, insbesondere eines Kunststoffs, sind im Stand der Technik bekannt. Der Fokus liegt dabei auf der Abtrennung einer gasförmigen Fraktion von einem Pyrolyseprodukt, während der Rest des Pyrolyseprodukts, insbesondere eine feststoffreiche Fraktion, typischerweise energetisch verwertet wird.

Beispielsweise wird in der EP 1 154 007 A1 ein Verfahren zur Pyrolyse eines Altkunststoffs offenbart. Dabei wird der Altkunststoff in einem ersten Pyrolysereaktor bei einer ersten Temperatur pyrolysiert, wobei ein erstes Pyrolyseprodukt umfassend eine erste gasförmige Fraktion und einen ersten Pyrolyserückstand erhalten wird. Der erste Pyrolyserückstand wird anschließend in einem zweiten Pyrolysereaktor bei einer zweiten Temperatur, die höher ist als die erste Temperatur, pyrolysiert, wobei ein zweites Pyrolyseprodukt umfassend eine zweite gasförmige Fraktion und einen zweiten Pyrolyserückstand erhalten wird. Der zweite Pyrolyserückstand wird einem magnetischen Trennverfahren unterzogen, um anorganische Füllstoffe und Altmetalle zu erhalten.

Ein weiteres Verfahren zur Pyrolyse eines Altkunststoffs wird in der WO 2016/116114 A1 beschrieben. Der Altkunststoff wird in einem Pyrolysereaktor in ein Pyrolyseprodukt umfassend eine gasförmige Fraktion und einen festen Pyrolyserückstand umgesetzt. Der Pyrolyserückstand wird dann in einer Trenneinheit, etwa in einem Zyklon, in eine feststoffarme Fraktion und eine feststoffreiche Fraktion getrennt. Die feststoffarme Fraktion wird zur neuerlichen Pyrolyse in den Pyrolysereaktor zurückgeführt. Die feststoffreiche Fraktion wird in einem Absetzbecken anhand ihrer Dichte aufgetrennt. Ein erster Teil der feststoffreichen Fraktion mit niedrigerer Dichte wird zusammen mit der feststoffarmen Fraktion in den Pyrolysereaktor zurückgeführt, während ein zweiter Teil der feststoffreichen Fraktion mit höherer Dichte als hochenergetischer Brennstoff eingesetzt werden kann.

Zwar kann das Pyrolyseprodukt mit diesen Verfahren zumindest teilweise wiederverwertet werden. Jedoch besteht Bedarf an einem Verfahren mit einem verringerten CO₂-Abdruck und einem größeren Beitrag zur Kreislaufwirtschaft und Nachhaltigkeit. Es ist eine Aufgabe dieser Erfindung, verglichen mit den bekannten Verfahren einen größeren Teil des Pyrolyserückstands stofflich zu verwerten.

Das erfindungsgemäße Verfahren zur Pyrolyse eines Kunststoffs umfasst die Schritte
(a) Pyrolysieren des Kunststoffs in einem ersten Pyrolysereaktor, um ein erstes Pyrolyseprodukt zu erhalten,
(b) Abtrennen eines Pyrolyserückstands vom ersten Pyrolyseprodukt in einer ersten Trenneinheit,
(c) Trennen des Pyrolyserückstands in eine feststoffarme Fraktion und eine feststoffeiche Fraktion in einer zweiten Trenneinheit, und
(d) Pyrolysieren der feststoffreichen Fraktion in einem zweiten Pyrolysereaktor, um ein zweites Pyrolyseprodukt zu erhalten.

Die Erfindung ist weiters gerichtet auf eine Vorrichtung zur Pyrolyse eines Kunststoffs, insbesondere eines Altkunststoffs, mit dem erfindungsgemäßen Verfahren, aufweisend
einen ersten Pyrolysereaktor zum Pyrolysieren des Kunststoffs,
eine erste Trenneinheit zum Abtrennen des Pyrolyserückstands vom ersten Pyrolyseprodukt,
eine zweite Trenneinheit zur Trennung des Pyrolyserückstands in die feststoffarme Fraktion und die feststoffreiche Fraktion, und
einen zweiten Pyrolysereaktor zum Pyrolysieren der feststoffreichen Fraktion.

Dieses Verfahren und diese Vorrichtung ermöglichen durch die Durchführung von zwei Pyrolyseschritten in zwei voneinander verschiedenen Pyrolysereaktoren und einer zwischen den beiden Pyrolyseschritten erfolgenden Trennung des Pyrolyserückstands in eine feststoffarme Fraktion und eine feststoffreiche Fraktion eine besonders gute Aufbereitung des ersten bzw. zweiten Pyrolyseprodukts und eine Trennung in einzelne Komponenten, wodurch ein hoher Recyclinggrad erreicht werden kann. Mit dem Verfahren kann folglich die Umwelt entlastet werden, da Treibhausgasemissionen gesenkt werden können und die Menge an Abfall reduziert werden kann. Insgesamt kann dadurch der Ressourcenverbrauch erheblich reduziert werden und die Kreislaufwirtschaft gestärkt werden, was auch wirtschaftliche Vorteile mit sich bringen kann.

Der Kunststoff umfasst vorzugsweise ein Polyolefin und/oder ein Polystyrol (PS), wobei das Polyolefin ein Polyethylen (PE) und/oder ein Polypropylen (PP) umfassen kann. Vorzugsweise umfasst der Kunststoff das Polyolefin und/oder das Polystyrol in einer Menge von zumindest 65 Gew%, bevorzugter zumindest 70 Gew%, insbesondere zumindest 90 Gew%, bezogen auf das Gesamtgewicht des Kunststoffs. Hierdurch kann ein Pyrolyserückstand erhalten werden, der einen signifikanten Anteil eines aliphatischen Kohlenwasserstoffs (bzw. einer Mischung aus mehreren aliphatischen Kohlenwasserstoffen) umfasst.

Vorzugsweise umfasst der Kunststoff zumindest 20 Gew% des Polyolefins, bevorzugter zumindest 50 Gew%, noch bevorzugter zumindest 70 Gew%, insbesondere zumindest 90 Gew%, bezogen auf das Gesamtgewicht des Kunststoffs. Mit steigendem Polyolefinanteil kann die mit dem erfindungsgemäßen Verfahren gewonnene Wachsmenge erhöht werden, was die Wirtschaftlichkeit des Verfahrens verbessern kann. Der Kunststoff kann ein weiteres Polymer aus der Gruppe bestehend aus Thermoplasten, Duromeren und/oder Elastomeren umfassen, insbesondere ein Acrylnitril-Butadien-Styrol-Copolymer (ABS), ein Polyvinylchlorid (PVC), ein Polyamid (PA) und/oder einen Polyester.

Vor Schritt (a) des Verfahrens kann der Kunststoff plastifiziert werden, beispielsweise in einem Mischer, insbesondere in einem Extruder. Der Kunststoff wird vorzugsweise auf eine Temperatur von zumindest 120 °C erwärmt, um ihn zu plastifizieren, bevorzugter auf eine Temperatur von 200 bis 500 °C, noch bevorzugter von 400 bis 470 °C. Dann kann die nachfolgende Pyrolyse energieeffizienter und in kürzerer Zeit durchgeführt werden.

Im Extruder kann der Kunststoff auch entgast werden, um eine einheitliche Masse ohne Gaseinschlüsse zu erzeugen, sodass durch die nachfolgende Pyrolyse ein homogenes Pyrolyseprodukt erhalten werden kann.

Vor Schritt (a) des Verfahrens kann dem Kunststoff, insbesondere dem plastifizierten Kunststoff, ein Verdünnungsmittel zur Viskositätsreduktion zugesetzt werden. Hierfür kann die Vorrichtung eine Einbringungsvorrichtung aufweisen, die eingerichtet ist, dem Kunststoff vor der Pyrolyse im ersten Pyrolysereaktor ein Verdünnungsmittel zur Viskositätsverringerung zuzusetzen. Das Verdünnungsmittel wird dem Kunststoff vorzugsweise in einer Menge von zumindest 5 Gew% zugesetzt, bevorzugter zumindest 9 Gew%, bezogen auf das Gesamtgewicht des Kunststoffs. Vorzugsweise liegt das Verhältnis von Kunststoff zu Verdünnungsmittel bei mindestens 1:4, vorzugsweise bei mindestens 1:9. Durch Zusetzen des Verdünnungsmittels zum Kunststoff kann die Beweglichkeit von Polymerketten bei einer gegebenen Temperatur erhöht werden, sodass während der Pyrolyse der Wärmeeintrag in den Kunststoff verbessert werden kann. Weiters kann aufgrund der Viskositätsreduzierung die Gefahr des Überhitzens von Kunststoff in Wandbereichen des Pyrolysereaktors verringert werden, da dessen Beheizung üblicherweise durch eine nahe einer Außenwand des Pyrolysereaktors angeordnete Heizvorrichtung erfolgt. Auch die Gefahr des Verkokens des Kunststoffs während der Pyrolyse kann durch die Viskositätsreduzierung verringert werden.

Durch Zugabe des Verdünnungsmittels zum Kunststoff kann dessen Viskosität vorzugsweise um zumindest 30% reduziert werden, bevorzugter um zumindest 50%, besonders bevorzugt um zumindest 80%, bezogen auf die Viskosität des Kunststoffs ohne Verdünnungsmittel unter denselben Messbedingungen, insbesondere bei einer Temperatur im Bereich von 180 bis 240 °C. Dadurch kann die Pumpfähigkeit des Kunststoffs verbessert werden, was dessen Verarbeitung erleichtern kann.

Bei der Zugabe des Verdünnungsmittels weist der Kunststoff bevorzugt eine Temperatur von zumindest 120 °C auf, bevorzugter eine Temperatur von 150 bis 300 °C, insbesondere von 200 bis 300 °C. Alternativ oder zusätzlich dazu kann das Verdünnungsmittel vor der Zugabe zum Kunststoff auf eine Temperatur von vorzugsweise zumindest 120 °C erwärmt werden, bevorzugter zumindest 150 °C, insbesondere auf eine Temperatur von 200 bis 300 °C. Durch eine Temperaturerhöhung des Kunststoffs und/oder des Verdünnungsmittels kann das Verdünnungsmittel schneller und effizienter in den Kunststoff eingemischt werden. Auch kann die nachfolgende Pyrolyse dadurch energieeffizienter und schneller durchgeführt werden.

Die Zugabe des Verdünnungsmittels zum Kunststoff kann mittels einer Zugabevorrichtung erfolgen. Die Zugabevorrichtung kann eine Dosiervorrichtung, etwa eine Dosierpumpe, aufweisen. Beispielsweise kann der Kunststoff, insbesondere der plastifizierte Kunststoff, einem Mischer, z.B. einem statischen Mischer, zugeführt und dort mit dem Verdünnungsmittel vermischt werden. Wird der Kunststoff in einem Extruder plastifiziert, kann die Zugabe des Verdünnungsmittels direkt im Extruder erfolgen. Hierfür kann die Zugabevorrichtung beispielsweise in der Kompressionszone oder Mischzone des Extruders angeordnet sein.

Das Verdünnungsmittel kann einen Kohlenwasserstoff ausgewählt aus einem Alkan, einem Cycloalkan und/oder einem Aromaten umfassen. Durch die Pyrolyse kann ein solches Verdünnungsmittel zu einem gasförmigen und/oder flüssigen Produkt umgesetzt werden, das zumindest teilweise vom Pyrolyserückstand abgetrennt und weiterverwertet werden kann. Insbesondere kann das Verdünnungsmittel eine aus Rohöl gewonnene Fraktion umfassen, bevorzugt ein Schweröl. Bei dem Schweröl kann es sich um ein in einer Erdölraffinerie aus Erdöl gewonnenes Öl handeln, z.B. um ein Rückstandsöl einer Pyrolyseanlage. Das Schweröl weist bevorzugt einen Anteil eines aromatischen Kohlenwasserstoffs von zumindest 25 Gew% auf, bezogen auf das Gesamtgewicht des Schweröls.

Alternativ oder zusätzlich kann das Verdünnungsmittel einen Teil der flüssigen Fraktion des ersten Pyrolyseprodukts und/oder einen Teil der feststoffarmen Fraktion umfassen. Dies kann eine Wiederverwendung der flüssigen Fraktion und der feststoffarmen Fraktion ermöglichen. Bevorzugt besteht das Verdünnungsmittel aus zumindest einem Teil der flüssigen Fraktion des ersten Pyrolyseprodukts und/oder zumindest einem Teil der feststoffarmen Fraktion. Dann kann ein hoher Wiederverwertungsgrad erreicht werden.

Das Verdünnungsmittel weist bevorzugt eine Siedetemperatur (bzw. ein unteres Ende eines Siedebereichs) von zumindest 300 °C auf, insbesondere zumindest 350 °C. Dadurch kann vermieden werden, dass das Verdünnungsmittel unmittelbar nach dem Einbringen einer Mischung aus Kunststoff und Verdünnungsmittel in den Pyrolysereaktor verdampft, sondern eine Verdampfung, Spaltung und/oder Depolymerisation des Verdünnungsmittels kann erst mit fortschreitender Verweildauer der Mischung im Pyrolysereaktor und damit einhergehender Aufheizung der Mischung erfolgen. Dadurch kann ein homogenes Pyrolyseprodukt erhalten werden.

In Schritt (a) des Verfahrens wird der Kunststoff in einem ersten Pyrolysereaktor pyrolysiert. Der erste Pyrolysereaktor kann ein Schneckenreaktor, ein Wirbelschichtreaktor, ein Drehrohrreaktor oder ein Koker sein, vorzugsweise ein Koker.

In Schritt (a) des Verfahrens liegt die Temperatur im ersten Pyrolysereaktor bevorzugt im Bereich von 300 bis 800 °C, bevorzugter von 350 bis 700 °C. Der Druck im ersten Pyrolysereaktor liegt in Schritt (a) vorzugsweise im Bereich von 1 bis 30 bar, bevorzugter von 5 bis 30 bar, noch bevorzugter 10 bis 25 bar. Weiters wird in Schritt (a) vorzugsweise für eine Zeitdauer von 0,3 min pyrolysiert, bevorzugter für eine Zeitdauer von 1 bis 10 min, insbesondere 1,5 bis 5 min. Hierdurch kann eine gute Balance zwischen Wirtschaftlichkeit und Verfahrenseffizienz erreicht werden.

Die Pyrolyse in Schritt (a) kann eine thermische Pyrolyse (d.h. ein thermisches Cracken, ohne Zusatz eines Katalysators) und/oder eine katalytische Pyrolyse (d.h. ein katalytisches Cracken) sein. Eine thermische Pyrolyse ist bevorzugt, um etwaige Verunreinigungen des Wachses und/oder des Feststoffs aufgrund von Katalysatorbestandteilen zu vermeiden.

Die Pyrolyse in Schritt (a) kann weitgehend unter Ausschluss von Sauerstoff durchgeführt werden, insbesondere in inerter Atmosphäre, beispielsweise unter Stickstoff. Durch einen Sauerstoffmangel bzw. Sauerstoffausschluss kann eine vollständige Verbrennung verhindert werden und kann ein im Kunststoff enthaltenes Polymer gespalten bzw. depolymerisiert werden.

Das erste Pyrolyseprodukt umfasst einen Pyrolyserückstand. Weiters umfasst das erste Pyrolyseprodukt eine flüssige Fraktion und/oder eine gasförmige Fraktion. In Schritt (b) des Verfahrens wird der Pyrolyserückstand vom ersten Pyrolyseprodukt in einer ersten Trenneinheit abgetrennt. Die Abtrennung kann durch Verdampfung und/oder eine Fliehkraftabscheidung (d.h. eine Zentrifugation) erfolgen, vorzugsweise durch eine Fliehkraftabscheidung. Dementsprechend kann die erste Trenneinheit einen Verdampfer, einen Zyklon und/oder einen Hydrozyklon aufweisen, insbesondere einen Hydrozyklon.

Die Temperatur in der ersten Trenneinheit liegt in Schritt (b) vorzugsweise im Bereich von 300 bis 700 °C, bevorzugter im Bereich von 330 bis 420 °C. Der Druck in der ersten Trenneinheit in Schritt (b) liegt bevorzugt im Bereich von 1 bis 15 bar, bevorzugter im Bereich von 2 bis 8 bar. Mit diesen Verfahrensparametern kann eine effiziente und gute Abtrennung des Pyrolyserückstands erreicht werden.

Die erste Trenneinheit weist vorzugsweise einen Hydrozyklon auf, mit welchem die gasförmige Fraktion, die flüssige Fraktion und der Pyrolyserückstand in nur einem Verfahrensschritt voneinander getrennt werden können. Ein solcher Hydrozyklon wird in der Anmeldung WO 2023/036751 A1 beschrieben. Durch Einleiten des ersten Pyrolyseprodukts über einen in einem oberen Bereich eines Mantels des Hydrozyklons angeordneten Einlass kann im Hydrozyklon eine Wirbelströmung erzeugt werden, wodurch die gasförmige Fraktion vom ersten Pyrolyseprodukt abgetrennt und über einen im oberen Bereich des Hydrozyklons (z.B. an dessen Decke) angeordneten Auslass abgeführt werden kann. Der verbleibende Teil des ersten Pyrolyseprodukts kann anschließend schwerkraftsbedingt in Richtung eines Bodens des Hydrozyklons abgeführt werden, wobei eine Tangentialgeschwindigkeit einer sich ausbildenden Wirbelströmung kontinuierlich zunehmen kann. Dadurch kann zumindest ein Teil des Pyrolyserückstands über einen im Boden des Hydrozyklons angeordneten Auslass abgeführt werden, während zumindest ein Teil einer flüssigen Fraktion des ersten Pyrolyseprodukts in einen im Hydrozyklon angeordneten Innenbehälter gelangen und von dort über einen Auslass abgeführt werden kann. Dieser Teil der flüssigen Fraktion kann anschließend als Verdünnungsmittel zur Viskositätsreduktion des Kunststoffs vor Schritt (a) des Verfahrens verwendet werden. Der über den im Boden des Hydrozyklons angeordneten Auslass abgeführte Pyrolyserückstand kann anschließend in Schritt (c) des Verfahrens verwendet werden. Der Hydrozyklon wird vorzugsweise bei einer Temperatur im Bereich von 300 und 450 °C betrieben, bevorzugter von 320 bis 420 °C, besonders bevorzugt von 360 bis 400 °C.

Der in Schritt (b) des Verfahrens abgetrennte Pyrolyserückstand weist vorzugsweise eine Siedetemperatur (bzw. ein unteres Ende eines Siedebereichs) von mindestens 250 °C auf, bevorzugter mindestens 300 °C, noch bevorzugter mindestens 330 °C, besonders bevorzugt mindestens 350 °C. Die Siedetemperatur (bzw. der Siedebereich) des Pyrolyserückstands kann mittels der Norm ASTM D7500-15:2019 (vorzugsweise wenn der Pyrolyserückstand eine Siedetemperatur bzw. einen Siedebereich von 100 bis 850 °C, insbesondere 100 bis 735 °C aufweist) oder mittels der Norm ASTM D2887-22:2022 (vorzugsweise wenn der Pyrolyserückstand eine Siedetemperatur bzw. einen Siedebereich von 55 bis 538 °C aufweist) bestimmt werden.

Der in Schritt (b) des Verfahrens abgetrennte Pyrolyserückstand umfasst vorzugsweise eine Kohlenstofffraktion mit zumindest 14 Kohlenstoffatomen pro Molekül, bevorzugter zumindest 16 Kohlenstoffatome pro Molekül, besonders bevorzugt zumindest 18 Kohlenstoffatome pro Molekül. Der Pyrolyserückstand kann dann gut im nachfolgenden Schritt (c) des Verfahrens getrennt werden.

In Schritt (c) des Verfahrens wird der Pyrolyserückstand in einer zweiten Trenneinheit in eine feststoffarme Fraktion und eine feststoffreiche Fraktion getrennt. Die feststoffarme Fraktion weist vorzugsweise einen flüssigen Anteil von mehr als 70 Gew.-% auf, bevorzugt mehr als 80 Gew.-%, mehr bevorzugt mehr als 85 Gew.-%, mehr bevorzugt mehr als 90 Gew.-%, mehr bevorzugt mehr als 95 Gew.-%, mehr bevorzugt mehr als 98 Gew.-%, mehr bevorzugt mehr als 99 Gew.-%. Vorzugsweise weist die feststoffarme Fraktion einen flüssigen Anteil im Bereich von 80 bis 100 Gew% auf, bevorzugter 90 bis 99,9 Gew%, bezogen auf das Gesamtgewicht der feststoffarmen Fraktion. Die feststoffarme Fraktion weist vorzugsweise eine Dichte bei 20 °C und 101325 Pa im Bereich von 0,600 bis 1,100 g/cm³ auf, bevorzugter 0,750 bis 0,990 g/cm³.

Die feststoffreiche Fraktion weist vorzugsweise einen flüssigen Anteil von weniger als 95 Gew.-% auf, bevorzugt weniger als 90 Gew.-%, mehr bevorzugt weniger als 85 Gew.-%, mehr bevorzugt weniger als 80 Gew.-%, mehr bevorzugt weniger als 75 Gew.-%, mehr bevorzugt weniger als 70 Gew.-%. Vorzugsweise weist die feststoffreiche Fraktion einen flüssigen Anteil im Bereich von 50 bis 95 Gew% auf, bevorzugter 70 bis 90 Gew%, bezogen auf das Gesamtgewicht der feststoffreichen Fraktion. Die feststoffreiche Fraktion weist vorzugsweise eine Dichte bei 20 °C und 101325 Pa im Bereich von 0,650 bis 1,300g/cm³ auf, bevorzugter 0,800 bis 1,150 g/cm³. Vorzugsweise weist die feststoffreiche Fraktion einen geringeren flüssigen Anteil auf als die feststoffarme Fraktion. Es ist ebenso bevorzugt, wenn die feststoffreiche Fraktion eine höhere Dichte bei 20 °C und 101325 Pa aufweist, als die feststoffarme Fraktion.

Das Trennen in der zweiten Trenneinheit kann eine gravimetrische Abscheidung, eine Filtration und/oder eine Fliehkraftabscheidung umfassen, vorzugsweise eine Fliehkraftabscheidung. Die gravimetrische Abscheidung kann eine Sedimentation und/oder ein Dekantieren umfassen. Dementsprechend kann die zweite Trenneinheit eine Vorrichtung zur gravimetrischen Abscheidung, einen Filter, eine Zentrifuge und/oder einen Hydrozyklon aufweisen, vorzugsweise einen Hydrozyklon. Die Vorrichtung zur gravimetrischen Abscheidung kann eine Sedimentationsanlage und/oder einen Dekanter aufweisen. Umfasst die zweite Trenneinheit einen Hydrozyklon, kann dieser in gleicher oder ähnlicher Weise aufgebaut sein und betrieben werden wie der Hydrozyklon der ersten Trenneinheit, wie vorhergehend beschrieben.

Vorzugsweise umfasst das Trennen in der zweiten Trenneinheit in Schritt (c) eine Fliehkraftabscheidung in Kombination mit einer Filtration oder einer gravimetrischen Abscheidung. Dabei kann die Fliehkraftabscheidung vor der Filtration bzw. vor der gravimetrischen Abscheidung erfolgen. Dementsprechend kann die zweite Trenneinheit den Hydrozyklon in Kombination mit dem Filter oder der Vorrichtung zur gravimetrischen Abscheidung aufweisen. Der Hydrozyklon kann dem Filter oder der Vorrichtung für gravimetrische Abscheidung vorgeschaltet sein. Auf diese Weise kann eine scharfe Trennung in die feststoffarme Fraktion und die feststoffreiche Fraktion erfolgen.

Die Temperatur in der zweiten Trenneinheit liegt vorzugsweise in Schritt (c) im Bereich von 100 bis 700 °C, bevorzugter 100 bis 350 °C, noch bevorzugter 100 bis 200 °C. Während einer gravimetrischen Abscheidung oder Filtration liegt die Temperatur vorzugsweise im Bereich von 180 bis 700 °C. Während einer Zentrifugation liegt die Temperatur vorzugsweise bei 200 °C oder darunter, bevorzugter im Bereich von 100 bis 180 °C. Während einer Fliehkraftabscheidung liegt die Temperatur vorzugsweise im Bereich von 200 bis 700 °C. Wird die Temperatur je nach Verfahren wie angegeben gewählt, kann die Trennung in eine feststoffarme Fraktion und eine feststoffreiche Fraktion effizient ablaufen.

In Schritt (d) des Verfahrens wird die feststoffreiche Fraktion in einem zweiten Pyrolysereaktor pyrolysiert, um ein zweites Pyrolyseprodukt zu erhalten. Der zweite Pyrolysereaktor kann ein Schneckenreaktor, ein Wirbelschichtreaktor, ein Drehrohrreaktor oder ein Koker sein, vorzugsweise ein Koker. Die Temperatur im zweiten Pyrolysereaktor liegt vorzugsweise im Bereich von 400 bis 800 °C, bevorzugter im Bereich von 500 bis 700 °C. Dadurch kann die feststoffreiche Fraktion effizient pyrolysiert werden.

Die Temperatur beim Pyrolysieren im zweiten Pyrolysereaktor in Schritt (d) kann höher sein als die Temperatur beim Pyrolysieren im ersten Pyrolysereaktor in Schritt (a). Die Temperatur im zweiten Pyrolysereaktor ist vorzugsweise um mindestens 50 °C höher als die Temperatur im ersten Pyrolysereaktor, bevorzugter mindestens 80 °C, noch bevorzugter mindestens 100 °C, noch bevorzugter mindestens 150 °C, insbesondere mindestens 200 °C.

Der Druck im zweiten Pyrolysereaktor liegt vorzugsweise im Bereich von 1 bis 20 bar, bevorzugter im Bereich von 2 bis 12 bar, insbesondere 2 bis 8 bar. Im zweiten Pyrolysereaktor wird vorzugsweise für eine Zeitdauer von 1 bis 90 min pyrolysiert, insbesondere von 1,5 bis 5 min. Hierdurch kann eine gute Balance zwischen Wirtschaftlichkeit und Verfahrenseffizienz erreicht werden.

Ein Verhältnis der volumetrischen Kapazität des ersten Pyrolysereaktors und des zweiten Pyrolysereaktors liegt bei maximal 10:3, bevorzugter bei maximal 10:2, vorzugsweise im Bereich von 10:0,2 bis 10:2, insbesondere von 10:1 bis 10:2. Unter der volumetrischen Kapazität wird dabei der maximal mögliche Füllgrad des jeweiligen Pyrolysereaktors verstanden.

Das zweite Pyrolyseprodukt kann einen Feststoff, ein Gas und/oder eine Flüssigkeit umfassen.

Die Menge des Gases liegt vorzugsweise bei mindestens 10 Gew%, bevorzugter bei mindestens 20 Gew%, noch bevorzugter bei mindestens 40 Gew%, bezogen auf das Gesamtgewicht des zweiten Pyrolyseprodukts. Das Gas umfasst vorzugsweise einen Anteil einer Kohlenstofffraktion von mindestens 5 Gew%, bevorzugter mindestens 15 Gew%, noch bevorzugter mindestens 20 Gew%, insbesondere mindestens 40 Gew%, bezogen auf das Gesamtgewicht des Gases. Die Kohlenstofffraktion des Gases umfasst vorzugsweise Methan, Ethan, Ethen, Propan, Propen, Butan, Buten, Butadien oder eine Mischung dieser Komponenten. Diese Komponenten des Gases können voneinander getrennt werden, etwa durch eine fraktionierte Destillation, um sie einer Weiterverwendung zuzuführen, beispielsweise anderen Anlagen einer Raffinerie.

Die Flüssigkeit umfasst vorzugsweise ein Öl, wobei das Öl ein Leichtöl und ein Schweröl umfassen kann. Das Leichtöl kann eine Kohlenstofffraktion von 3 bis 14 Kohlenstoffatomen pro Molekül umfassen, und das Schweröl kann eine Kohlenstofffraktion von 11 bis 50 Kohlenstoffatomen pro Molekül umfassen. Eine Trennung einzelner Komponenten des Öls voneinander, insbesondere einzelner Komponenten der Kohlenstofffraktion voneinander, kann etwa durch eine fraktionierte Destillation erfolgen, was eine nachfolgende Weiterverwendung, beispielsweise als Kraftstoff, ermöglicht. Die Trennung des Gases und der Flüssigkeit voneinander sowie die Trennung des Gases und/oder der Flüssigkeit in einzelne Komponenten können in derselben Destillationsapparatur erfolgen.

Die Menge des Feststoffs liegt vorzugsweise bei maximal 70 Gew%, bevorzugter bei maximal 55 Gew%, noch bevorzugter bei maximal 30 Gew%, bezogen auf das Gesamtgewicht des zweiten Pyrolyseprodukts. Der Feststoff kann ein anorganisches Salz, einen keramischen Rohstoff, ein Asphalten, ein Teer und/oder ein Koks umfassen. Insbesondere kann der Feststoff Talkum, ein Eisenoxid (z.B. Eisen(III)-oxid), Aluminiumoxid, Titandioxid, Magnesiumoxid und/oder Calciumcarbonat umfassen. Wird der bereitgestellte Pyrolyserückstand durch Pyrolysieren eines Kunststoffs erhalten, kann der Feststoff einen im Kunststoff enthaltenen Zusatzstoff umfassen. Beispielsweise kann der Zusatzstoff einen Füllstoff, ein Farbpigment, und/oder ein Additiv umfassen. Einer Fachperson ist bekannt, welche Zusatzstoffe in Abhängigkeit des jeweiligen Kunststoffs und Anwendungsgebiets verwendet werden.

Das Verfahren kann einen weiteren Schritt (e) umfassen: Abtrennen zumindest eines Teils des Feststoffs vom zweiten Pyrolyseprodukt. Hierfür kann die Vorrichtung eine Feststoff-Abtrennvorrichtung aufweisen.

Die Abtrennung des Feststoffs vom zweiten Pyrolyseprodukt kann eine gravimetrische Abscheidung, eine Filtration und/oder eine Fliehkraftabscheidung umfassen, vorzugsweise eine Filtration. Die gravimetrische Abscheidung kann eine Sedimentation und/oder ein Dekantieren umfassen. Umfasst die Abtrennung eine Filtration, kann diese mit einem Filtermedium, das eine Aktivkohle oder eine Bleicherde umfassen kann, durchgeführt werden. Dadurch können etwaige gemeinsam mit dem Wachs im Lösungsmittel gelöste, polare Komponenten (z.B. ein Teer oder ein Polyphenol) abgetrennt und vom Filtermedium adsorbiert werden. Bei der Filtration können auch Partikel mit einer mittleren Partikelgröße (D50) von unter 100 µm, insbesondere unter 50 pm, leicht entfernt werden (bestimmt mittels Laserdiffraktometrie).

Die Abtrennung des Feststoffs vom zweiten Pyrolyseprodukt kann auch direkt im zweiten Pyrolysereaktor erfolgen. Bevorzugt ist der zweite Pyrolysereaktor für diese Zwecke ein Schneckenreaktor. Der Feststoff kann mittels einer Austragsvorrichtung unmittelbar aus dem Extruder ausgetragen werden.

Der Feststoff kann nach seinem Abtrennen vom zweiten Pyrolyseprodukt, d.h. nach Schritt (e) des Verfahrens, getrocknet werden, etwa in einem Ofen. Dadurch kann der Feststoff rieselfähig und dadurch leichter verarbeitbar gemacht werden. Der Feststoff wird vorzugsweise bei einer Temperatur im Bereich von 50 bis 250 °C getrocknet, bevorzugter von 100 bis 200 °C, noch bevorzugter von 130 bis 160 °C. Die Zeitdauer der Trocknung beträgt vorzugsweise bis zu 120 min, insbesondere von 5 bis 60 min. Vom Feststoff, insbesondere vom getrockneten Feststoff, kann eine Komponente bzw. können mehrere Komponenten abgetrennt und danach wiederverwendet werden, z.B. als Zusatzstoff für einen Kunststoff.

Die Erfindung betrifft insbesondere die folgenden Ausführungsformen:
1. Verfahren zur Pyrolyse eines Kunststoffs, insbesondere eines Altkunststoffs, umfassend die Schritte
   (a) Pyrolysieren des Kunststoffs in einem ersten Pyrolysereaktor, um ein erstes Pyrolyseprodukt zu erhalten,
   (b) Abtrennen eines Pyrolyserückstands vom ersten Pyrolyseprodukt in einer ersten Trenneinheit,
   (c) Trennen des Pyrolyserückstands in eine feststoffarme Fraktion und eine feststoffreiche Fraktion in einer zweiten Trenneinheit, und
   (d) Pyrolysieren der feststoffreichen Fraktion in einem zweiten Pyrolysereaktor, um ein zweites Pyrolyseprodukt zu erhalten.
2. Verfahren nach Ausführungsform 1, wobei der Kunststoff ein Polyolefin und/oder ein Polystyrol (PS) umfasst, wobei das Polyolefin vorzugsweise ein Polyethylen (PE) und/oder ein Polypropylen (PP) umfasst.
3. Verfahren nach Ausführungsform 2, wobei der Kunststoff das Polyolefin und/oder das Polystyrol in einer Menge von zumindest 65 Gew% umfasst, bevorzugter zumindest 70 Gew%, insbesondere zumindest 90 Gew%, bezogen auf das Gesamtgewicht des Kunststoffs.
4. Verfahren nach Ausführungsform 2 oder 3, wobei der Kunststoff zumindest 20 Gew% eines Polyolefins umfasst, vorzugsweise zumindest 50 Gew%, bevorzugter zumindest 70 Gew%, insbesondere zumindest 90 Gew%, bezogen auf das Gesamtgewicht des Kunststoffs.
5. Verfahren nach einer der vorhergehenden Ausführungsformen, wobei der Kunststoff vor Schritt (a) auf eine Temperatur von zumindest 120 °C erwärmt wird, vorzugsweise auf eine Temperatur von 200 bis 500 °C, bevorzugter von 400 bis 470 °C.
6. Verfahren nach einer der vorhergehenden Ausführungsformen, wobei dem Kunststoff vor Schritt (a) ein Verdünnungsmittel zur Viskositätsverringerung zugesetzt wird.
7. Verfahren nach Ausführungsform 6, wobei das Verdünnungsmittel dem Kunststoff in einer Menge von zumindest 5 Gew% zugesetzt wird, bevorzugter zumindest 9 Gew%, bezogen auf das Gesamtgewicht des Kunststoffs.
8. Verfahren nach Ausführungsform 6 oder 7, wobei das Verhältnis von Kunststoff zu Verdünnungsmittel bei mindestens 1:4 liegt, vorzugsweise bei mindestens 1:9.
9. Verfahren nach einer der Ausführungsformen 6 bis 8, wobei das Verdünnungsmittel einen Kohlenwasserstoff ausgewählt aus einem Alkan, einem Cycloalkan und/oder einem Aromaten umfasst.
10. Verfahren nach einer der Ausführungsformen 6 bis 9, wobei das Verdünnungsmittel eine aus Rohöl gewonnene Fraktion umfasst, vorzugsweise ein Schweröl, insbesondere ein Schweröl mit einem Anteil eines aromatischen Kohlenwasserstoffs von zumindest 25 Gew%, bezogen auf das Gesamtgewicht des Schweröls.
11. Verfahren nach einer der Ausführungsformen 6 bis 10, wobei das Verdünnungsmittel einen Teil der flüssigen Fraktion des ersten Pyrolyseprodukts und/oder einen Teil der feststoffarmen Fraktion umfasst.
12. Verfahren nach einer der Ausführungsformen 6 bis 11, wobei das Verdünnungsmittel eine Siedetemperatur von zumindest 300 °C aufweist, vorzugsweise zumindest 350 °C.
13. Verfahren nach einer der Ausführungsformen 6 bis 12, wobei das Verdünnungsmittel und/oder der Kunststoff auf eine Temperatur von zumindest 120 °C, vorzugsweise zumindest 150 °C, erwärmt wird/werden, bevor das Verdünnungsmittel dem Kunststoff zugesetzt wird, vorzugsweise auf eine Temperatur im Bereich von 150 bis 300 °C, bevorzugter auf 200 bis 300 °C.
14. Verfahren nach einer der vorhergehenden Ausführungsformen, wobei die Temperatur im ersten Pyrolysereaktor in Schritt (a) im Bereich von 300 bis 800 °C liegt, vorzugsweise von 350 bis 700 °C.
15. Verfahren nach einer der vorhergehenden Ausführungsformen, wobei der Druck im ersten Pyrolysereaktor in Schritt (a) im Bereich von 1 bis 30 bar liegt, vorzugsweise von 5 bis 30 bar, bevorzugter 10 bis 25 bar.
16. Verfahren nach einer der vorhergehenden Ausführungsformen, wobei in Schritt (a) für eine Zeitdauer von mindestens 0,3 min pyrolysiert wird, vorzugsweise für eine Zeitdauer von 1 bis 10 min, insbesondere von 1,5 bis 5 min.
17. Verfahren nach einer der vorhergehenden Ausführungsformen, wobei das Trennen in der ersten Trenneinheit in Schritt (b) eine Verdampfung und/oder eine Fliehkraftabscheidung umfasst, vorzugsweise eine Fliehkraftabscheidung.
18. Verfahren nach einer der vorhergehenden Ausführungsformen, wobei die Temperatur in der ersten Trenneinheit in Schritt (b) im Bereich von 300 bis 700 °C liegt, vorzugsweise von 330 bis 420 °C.
19. Verfahren nach einer der vorhergehenden Ausführungsformen, wobei der Druck in der ersten Trenneinheit in Schritt (b) im Bereich von 1 bis 15 bar liegt, vorzugsweise von 2 bis 8 bar.
20. Verfahren nach einer der vorhergehenden Ausführungsformen, wobei der in Schritt (b) abgetrennte Pyrolyserückstand eine Siedetemperatur von mindestens 250 °C aufweist, vorzugsweise mindestens 300 °C, bevorzugter mindestens 330 °C, besonders bevorzugt mindestens 350 °C.
21. Verfahren nach einer der vorhergehenden Ausführungsformen, wobei der in Schritt (b) abgetrennte Pyrolyserückstand eine Kohlenstofffraktion mit zumindest 14 Kohlenstoffatomen pro Molekül umfasst, vorzugsweise zumindest 16 Kohlenstoffatome pro Molekül, besonders bevorzugt zumindest 18 Kohlenstoffatome pro Molekül.
22. Verfahren nach einer der vorhergehenden Ausführungsformen, wobei die feststoffarme Fraktion einen flüssigen Anteil von mehr als 70 Gew.-% aufweist, bevorzugt mehr als 80 Gew.-%, mehr bevorzugt mehr als 85 Gew.-%, mehr bevorzugt mehr als 90 Gew.-%, mehr bevorzugt mehr als 95 Gew.-%, mehr bevorzugt mehr als 98 Gew.-%, mehr bevorzugt mehr als 99 Gew.-%.
23. Verfahren nach einer der vorhergehenden Ausführungsformen, wobei die feststoffreiche Fraktion einen flüssigen Anteil von weniger als 95 Gew.-% aufweist, bevorzugt weniger als 90 Gew.-%, mehr bevorzugt weniger als 85 Gew.-%, mehr bevorzugt weniger als 80 Gew.-%, mehr bevorzugt weniger als 75 Gew.-%, mehr bevorzugt weniger als 70 Gew.-%.
24. Verfahren nach einer der vorhergehenden Ausführungsformen, wobei die feststoffarme Fraktion einen flüssigen Anteil im Bereich von 80 bis 100 Gew% aufweist, vorzugweise von 90 bis 99,9 Gew%, bezogen auf das Gesamtgewicht der feststoffarmen Fraktion; und/oder wobei die feststoffreiche Fraktion einen flüssigen Anteil im Bereich von 50 bis 95 Gew% aufweist, vorzugweise von 70 bis 90 Gew%, bezogen auf das Gesamtgewicht der feststoffreichen Fraktion.
25. Verfahren nach einer der vorhergehenden Ausführungsformen, wobei die feststoffarme Fraktion eine Dichte bei 20 °C und 101325 Pa im Bereich von 0,600 bis 1,100 g/cm³ aufweist, vorzugsweise von 0,750 bis 0,990 g/cm³, bezogen auf das Gesamtgewicht der feststoffarmen Fraktion; und/oder wobei die feststoffreiche Fraktion eine Dichte bei 20 °C und 101325 Pa im Bereich von 0,650 bis 1,300g/cm³ aufweist, vorzugsweise von 0,800 bis 1,150 g/cm³, bezogen auf das Gesamtgewicht der feststoffreichen Fraktion.
26. Verfahren nach einer der vorhergehenden Ausführungsformen, wobei die Temperatur in der zweiten Trenneinheit in Schritt (c) im Bereich von 100 bis 700 °C liegt, vorzugsweise von 100 bis 350 °C, bevorzugter 100 bis 200 °C.
27. Verfahren nach einer der vorhergehenden Ausführungsformen, wobei das Trennen in der zweiten Trenneinheit in Schritt (c) eine gravimetrische Abscheidung, eine Filtration und/oder eine Fliehkraftabscheidung umfasst, vorzugsweise eine Fliehkraftabscheidung.
28. Verfahren nach Ausführungsform 27, wobei das Trennen in der zweiten Trenneinheit in Schritt (c) die Fliehkraftabscheidung in Kombination mit der Filtration oder der gravimetrischen Abscheidung umfasst.
29. Verfahren nach Ausführungsform 27, wobei die Fliehkraftabscheidung vor der Filtration oder vor der gravimetrischen Abscheidung erfolgt.
30. Verfahren nach einer der Ausführungsformen 27 bis 29, wobei die Temperatur während der gravimetrischen Abscheidung oder Filtration im Bereich von 180 bis 700 °C liegt; wobei die Temperatur während der Zentrifugation, bei 200 °C oder darunter liegt, bevorzugter im Bereich von 100 bis 180 °C; und/oder wobei die Temperatur während der Fliehkraftabscheidung im Bereich von 200 bis 700 °C liegt.
31. Verfahren nach einer der vorhergehenden Ausführungsformen, wobei die Temperatur im zweiten Pyrolysereaktor in Schritt (d) im Bereich von 400 bis 800 °C liegt, vorzugsweise im Bereich von 500 bis 700 °C.
32. Verfahren nach einer der vorhergehenden Ausführungsformen, wobei die Temperatur beim Pyrolysieren im zweiten Pyrolysereaktor in Schritt (d) höher ist als die Temperatur beim Pyrolysieren im ersten Pyrolysereaktor in Schritt (a).
33. Verfahren nach Ausführungsform 32, wobei die Temperatur im zweiten Pyrolysereaktor um mindestens 50 °C höher ist als die Temperatur im ersten Pyrolysereaktor, vorzugsweise mindestens 80 °C, bevorzugter mindestens 100 °C, noch bevorzugter mindestens 150 °C, insbesondere mindestens 200 °C.
34. Verfahren nach einer der vorhergehenden Ausführungsformen, wobei der Druck im zweiten Pyrolysereaktor in Schritt (d) im Bereich von 1 bis 20 bar liegt, vorzugsweise von 2 bis 12 bar, bevorzugter von 2 bis 8 bar.
35. Verfahren nach einer der vorhergehenden Ausführungsformen, wobei in Schritt (d) für eine Zeitdauer von 1 bis 90 min pyrolysiert wird, bevorzugt von 1,5 bis 5 min.
36. Verfahren nach einer der vorhergehenden Ausführungsformen, wobei ein Verhältnis der volumetrischen Kapazität des ersten Pyrolysereaktors und des zweiten Pyrolysereaktors bei maximal 10:3 liegt, vorzugsweise im Bereich von 10:0,2 bis 10:2, bevorzugter von 10:1 bis 10:2.
37. Verfahren nach einer der vorhergehenden Ausführungsformen, wobei das zweite Pyrolyseprodukt einen Feststoff, ein Gas und/oder eine Flüssigkeit umfasst.
38. Verfahren nach Ausführungsform 37, wobei die Menge des Gases bei mindestens 10 Gew% liegt, vorzugsweise bei mindestens 20 Gew%, bevorzugter bei mindestens 40 Gew%, bezogen auf das Gesamtgewicht des zweiten Pyrolyseprodukts.
39. Verfahren nach Ausführungsform 37 oder 38, wobei das Gas einen Anteil einer Kohlenstofffraktion von mindestens 5 Gew% umfasst, vorzugsweise mindestens 15 Gew%, bevorzugter mindestens 20 Gew%, insbesondere mindestens 40 Gew%, bezogen auf das Gesamtgewicht des Gases.
40. Verfahren nach Ausführungsform 39, wobei die Kohlenstofffraktion Methan, Ethan, Ethen, Propan, Propen, Butan, Buten, Butadien oder eine Mischung dieser Komponenten umfasst.
41. Verfahren nach einer der Ausführungsformen 37 bis 40, wobei die Flüssigkeit ein Öl umfasst, wobei das Öl vorzugsweise ein Leichtöl und ein Schweröl umfasst.
42. Verfahren nach Ausführungsform 41, wobei das Leichtöl vorzugsweise eine Kohlenstofffraktion von 3 bis 14 Kohlenstoffatomen pro Molekül umfasst, und/oder wobei das Schweröl vorzugsweise eine Kohlenstofffraktion von 11 bis 50 Kohlenstoffatomen pro Molekül umfasst.
43. Verfahren nach einer der Ausführungsformen 37 bis 42, wobei die Menge des Feststoffs bei maximal 70 Gew% liegt, vorzugsweise bei maximal 55 Gew%, bevorzugter bei maximal 30 Gew%, bezogen auf das Gesamtgewicht des zweiten Pyrolyseprodukts.
44. Verfahren nach einer der Ausführungsformen 37 bis 43, wobei der Feststoff ein anorganisches Salz, einen keramischen Rohstoff, ein Asphalten, ein Teer und/oder ein Koks umfasst.
45. Verfahren nach einer der Ausführungsformen 37 bis 44, weiters umfassend Schritt (e): Abtrennen zumindest eines Teils des Feststoffs vom zweiten Pyrolyseprodukt.
46. Verfahren nach Ausführungsform 45, wobei das Abtrennen in Schritt (e) eine gravimetrische Abscheidung, eine Filtration und/oder eine Fliehkraftabscheidung umfasst, vorzugsweise eine Filtration.
47. Verfahren nach Ausführungsform 46, wobei die Filtration die Abtrennung mit einem eine Aktivkohle oder eine Bleicherde enthaltenden Filtermedium umfasst.
48. Verfahren nach einer der Ausführungsformen 45 bis 47, wobei der Feststoff nach Schritt (e) getrocknet wird, vorzugsweise bei einer Temperatur im Bereich von 50 bis 250 °C, bevorzugter von 100 bis 200 °C, insbesondere von 130 bis 160 °C; und/oder für eine Zeitdauer von bis zu 120 min, vorzugsweise von 5 bis 60 min.
49. Verfahren nach einer der Ausführungsformen 37 bis 48, wobei das Gas und/oder die Flüssigkeit mittels einer fraktionierten Destillation voneinander getrennt werden.
50. Verfahren nach Ausführungsform 49, wobei das Gas und/oder die Flüssigkeit mittels der fraktionierten Destillation in einzelne Komponenten aufgetrennt werden.
51. Vorrichtung zur Pyrolyse eines Kunststoffs, insbesondere eines Altkunststoffs, mit einem Verfahren nach einer der Ausführungsformen 1 bis 50, aufweisend
   einen ersten Pyrolysereaktor zum Pyrolysieren des Kunststoffs,
   eine erste Trenneinheit zum Abtrennen des Pyrolyserückstands vom ersten Pyrolyseprodukt,
   eine zweite Trenneinheit zur Trennung des Pyrolyserückstands in die feststoffarme Fraktion und die feststoffreiche Fraktion, und
   einen zweiten Pyrolysereaktor zum Pyrolysieren der feststoffreichen Fraktion.
52. Vorrichtung nach Ausführungsform 50, weiters aufweisend eine Zugabevorrichtung zur Zugabe eines Verdünnungsmittels zum Kunststoff vor der Pyrolyse im ersten Pyrolysereaktor.
53. Vorrichtung nach Ausführungsform 50 oder 52, wobei der erste Pyrolysereaktor und/oder der zweite Pyrolysereaktor ein Schneckenreaktor, ein Wirbelschichtreaktor, ein Drehrohrreaktor oder ein Koker ist/sind, vorzugsweise ein Koker.
54. Vorrichtung nach einer der Ausführungsformen 51 bis 53, wobei die erste Trenneinheit einen Verdampfer, einen Zyklon und/oder einen Hydrozyklon aufweist, insbesondere einen Hydrozyklon.
55. Vorrichtung nach einer der Ausführungsformen 51 bis 54, wobei die zweite Trenneinheit eine Vorrichtung zur gravimetrischen Abscheidung, einen Filter, eine Zentrifuge und/oder einen Hydrozyklon aufweist, vorzugsweise einen Hydrozyklon.
56. Vorrichtung nach Ausführungsform 55, wobei die zweite Trenneinheit den Hydrozyklon in Kombination mit dem Filter oder der Vorrichtung zur gravimetrischen Abscheidung aufweist, wobei der Hydrozyklon dem Filter oder der Vorrichtung zur gravimetrischen Abscheidung vorzugsweise vorgeschaltet ist.
57. Vorrichtung nach einer der Ausführungsformen 51 bis 56, weiters aufweisend eine Feststoff-Abtrennvorrichtung zur Abtrennung zumindest eines Teils eines Feststoffs vom zweiten Pyrolyseprodukt.
58. Vorrichtung nach einer der Ausführungsformen 51 bis 57, weiters aufweisend eine Destillationsapparatur zur Abtrennung eines Gases und/oder einer Flüssigkeit vom zweiten Pyrolyseprodukt.

Die Erfindung wird nachstehend anhand von Figurenbeschreibungen einiger Ausführungsformen weiter erläutert, auf die die Erfindung jedoch nicht beschränkt ist.

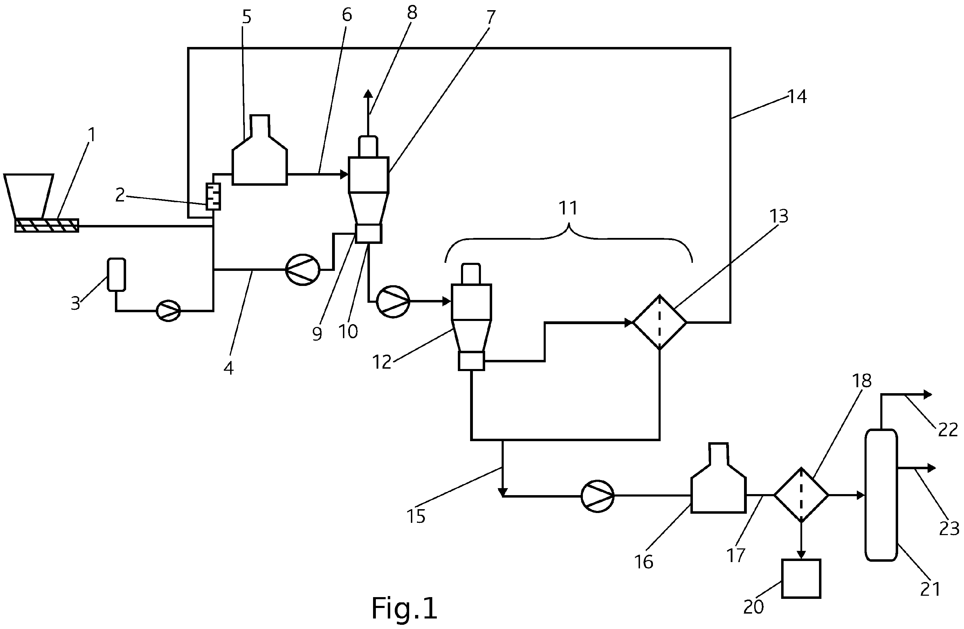

Fig. 1 zeigt ein Fließschema eines Verfahrens zur Pyrolyse eines Kunststoffs.

Wie aus Fig. 1 ersichtlich, wird ein Kunststoff, der zumindest 50 Gew% eines Polyolefins umfasst, einem Extruder 1 zugeführt, in welchem der Kunststoff plastifiziert und entgast wird. Der plastifizierte Kunststoff weist eine Temperatur von zumindest 120 °C auf und wird anschließend einem statischen Mischer 2 zugegeben. Im statischen Mischer 2 kann dem plastifizierten Kunststoff ein Verdünnungsmittel 3 zugesetzt werden, um dessen Viskosität zu reduzieren. Alternativ oder zusätzlich zum Verdünnungsmittel 3 kann ein vom ersten Pyrolyseprodukt 6 abgetrennter Teil einer flüssigen Fraktion 4 mit dem plastifizierten Kunststoff gemischt werden, um dessen Viskosität zu reduzieren. Die erhaltene Mischung wird anschließend einem ersten Pyrolysereaktor 5 zugeführt, in welchem der Kunststoff bei einer Temperatur von 350 bis 700 °C pyrolysiert wird. Dadurch wird ein erstes Pyrolyseprodukt 6 umfassend eine gasförmige Fraktion, eine flüssige Fraktion und einen Pyrolyserückstand erhalten. Das erste Pyrolyseprodukt 6 wird einer dem ersten Pyrolysereaktor 5 nachgeschalteten ersten Trennheit 7, die einen Hydrozyklon aufweist, zugeführt. Zunächst wird die gasförmige Fraktion im Hydrozyklon zumindest teilweise abgetrennt. Der abgetrennte Teil der gasförmigen Fraktion 8 kann anschließend weiter in ein Leichtöl (z.B. mit einem Siedebereich von 35 bis 225 °C) und ein Schweröl (z.B. mit einem Siedebereich von 225 bis 410 °C) aufgetrennt werden (nicht dargestellt). Weiters wird im Hydrozyklon die flüssige Fraktion zumindest teilweise abgetrennt. Der abgetrennte Teil der flüssigen Fraktion 4 kann über einen Auslass 9 des Hydrozyklons abgeführt und im Verfahren zur Viskositätsreduktion des Kunststoffs wiederverwendet werden, wie zuvor beschrieben. Zumindest ein Teil des Pyrolyserückstands, der den Pyrolyserückstand zumindest teilweise umfasst, wird über einen im Boden des Hydrozyklons angeordneten Auslass 10 abgeführt.

Wie in Fig. 1 weiters zu sehen ist, wird der über den Auslass 10 abgeführte Pyrolyserückstand einer zweiten Trenneinheit 11, die einen Hydrozyklon 12 und einen Filter 13 aufweist, zugeführt, wo er in eine feststoffarme Fraktion 14 und eine feststoffreiche Fraktion 15 getrennt wird. Die feststoffarme Fraktion weist einen flüssigen Anteil im Bereich von 80 bis 100 Gew% auf, bezogen auf das Gesamtgewicht der feststoffarmen Fraktion, und die feststoffreiche Fraktion weist einen flüssigen Anteil im Bereich von 50 bis 95 Gew% auf, bezogen auf das Gesamtgewicht der feststoffreichen Fraktion. Die feststoffarme Fraktion 14 kann im Verfahren wiederverwendet werden, indem zumindest ein Teil der feststoffarmen Fraktion 14 dem plastifizierten Kunststoff im Mischer 2 zur Viskositätsreduktion zugegeben wird. Die feststoffreiche Fraktion 15 wird anschließend in einem zweiten Pyrolysereaktor 16 bei einer Temperatur im Bereich von 500 bis 700 °C pyrolysiert, wobei die Temperatur im zweiten Pyrolysereaktor 16 um mindestens 80 °C höher ist als im ersten Pyrolysereaktor 5, um ein zweites Pyrolyseprodukt 17 zu erhalten. Mittels einer Feststoff-Abtrennvorrichtung 18, die einen Filter aufweist, wird zumindest ein Teil des Feststoffs vom zweiten Pyrolyseprodukt 17 abgetrennt. Dabei umfasst ein Filtermedium des Filters eine Aktivkohle. Der abgetrennte Teil des Feststoffs 19 wird in einem Ofen 20 bei einer Temperatur von 100 bis 200 °C getrocknet. Nachfolgend können einzelne Komponenten vom Feststoff abgetrennt und weiterverwendet werden (nicht gezeigt). Der verbleibende Teil des zweiten Pyrolyseprodukts wird in einer Destillationsapparatur 21 mittels einer fraktionierten Destillation in ein Gas 22 und eine Flüssigkeit 23 aufgetrennt, bzw. kann auch in einen oder mehrere Komponenten eines Gases und/oder einen oder mehrere Komponenten einer Flüssigkeit aufgetrennt werden.

## Patentansprüche

1. Verfahren zur Pyrolyse eines Kunststoffs, insbesondere eines Altkunststoffs, umfassend die Schritte
(a) Pyrolysieren des Kunststoffs in einem ersten Pyrolysereaktor, um ein erstes Pyrolyseprodukt zu erhalten,
(b) Abtrennen eines Pyrolyserückstands vom ersten Pyrolyseprodukt in einer ersten Trenneinheit,
(c) Trennen des Pyrolyserückstands in eine feststoffarme Fraktion und eine feststoffreiche Fraktion in einer zweiten Trenneinheit, und
(d) Pyrolysieren der feststoffreichen Fraktion in einem zweiten Pyrolysereaktor, um ein zweites Pyrolyseprodukt zu erhalten.

2. Verfahren nach Anspruch 1, wobei der in Schritt (b) abgetrennte Pyrolyserückstand eine Siedetemperatur von mindestens 250 °C aufweist.

3. Verfahren nach Anspruch 1 oder 2, wobei die feststoffarme Fraktion einen flüssigen Anteil im Bereich von 80 bis 100 Gew% aufweist, bezogen auf das Gesamtgewicht der feststoffarmen Fraktion; und/oder wobei die feststoffreiche Fraktion einen flüssigen Anteil im Bereich von 50 bis 95 Gew% aufweist, bezogen auf das Gesamtgewicht der feststoffreichen Fraktion.

4. Verfahren nach einem der Ansprüche 1 bis 3, wobei das Trennen in der zweiten Trenneinheit in Schritt (c) eine Fliehkraftabscheidung umfasst.

5. Verfahren nach Anspruch 4, wobei das Trennen in der zweiten Trenneinheit in Schritt (c) die Fliehkraftabscheidung in Kombination mit einer Filtration oder einer gravimetrischen Abscheidung umfasst.

6. Verfahren nach einem der Ansprüche 1 bis 5, wobei ein Verhältnis der volumetrischen Kapazität des ersten Pyrolysereaktors und des zweiten Pyrolysereaktors bei maximal 10:3 liegt.

7. Verfahren nach einem der Ansprüche 1 bis 6, wobei das zweite Pyrolyseprodukt einen Feststoff, ein Gas und/oder eine Flüssigkeit umfasst.

8. Verfahren nach Anspruch 7, wobei das Gas einen Anteil einer Kohlenstofffraktion von mindestens 20 Gew% umfasst, bezogen auf das Gesamtgewicht des Gases.

9. Verfahren nach Anspruch 7 oder 8, wobei die Menge des Feststoffs bei maximal 70 Gew% liegt, bezogen auf das Gesamtgewicht des zweiten Pyrolyseprodukts.

10. Verfahren nach einem der Ansprüche 1 bis 9, weiters umfassend Schritt (e): Abtrennen zumindest eines Teils des Feststoffs vom zweiten Pyrolyseprodukt.

11. Verfahren nach Anspruch 10, wobei das Abtrennen in Schritt (e) eine Filtration umfasst, vorzugsweise mit einem eine Aktivkohle oder eine Bleicherde enthaltenden Filtermedium.

12. Vorrichtung zur Pyrolyse eines Kunststoffs, insbesondere eines Altkunststoffs, mit dem Verfahren nach einer der Ansprüche 1 bis 11, aufweisend
einen ersten Pyrolysereaktor (5) zum Pyrolysieren des Kunststoffs,
eine erste Trenneinheit (7) zum Abtrennen des Pyrolyserückstands vom ersten Pyrolyseprodukt,
eine zweite Trenneinheit (11) zur Trennung des Pyrolyserückstands in die feststoffarme Fraktion und die feststoffreiche Fraktion, und
einen zweiten Pyrolysereaktor (16) zum Pyrolysieren der feststoffreichen Fraktion.

13. Vorrichtung nach Anspruch 12, wobei die zweite Trenneinheit (11) einen Hydrozyklon (12) aufweist.

14. Vorrichtung nach Anspruch 13, wobei die zweite Trenneinheit (11) den Hydrozyklon (12) in Kombination mit einem Filter (13) oder einer Vorrichtung zur gravimetrischen Abscheidung aufweist.

15. Vorrichtung nach einem der Ansprüche 12 bis 14, weiters aufweisend eine Feststoff-Abtrennvorrichtung (18) zur Abtrennung zumindest eines Teils eines Feststoffs vom zweiten Pyrolyseprodukt.
